# EUROPEAN PATENT APPLICATION

(11) **EP 4 446 399 A1**
(43) Date of publication of application: **16.10.2024**
(21) Application number: 22904261.9
(22) Date of filing: 07.12.2022
(51) Int. Cl.: C10N 30/00, C10N 40/30, C10M 105/38, C09K 5/04

(54) **REFRIGERATOR OIL COMPOSITION AND MIXED COMPOSITION FOR REFRIGERATOR**

(30) Priority: 08.12.2021 JP 2021199574
(71) Applicant: Idemitsu Kosan Co.,Ltd., Tokyo 100-8321 (JP)
(72) Inventor: KOJIMA, Akio, Tokyo 100-8321 (JP); KISEN, Tadashi, Tokyo 100-8321 (JP); NAKAJIMA, So, Tokyo 100-8321 (JP)
(74) Representative: Hoffmann Eitle
(86) International application number: PCT/JP2022/045099
(87) International publication number: WO 2023/106333

(57) **Abstract**

A problem to be solved is to provide a refrigerator oil composition that has an appropriate dissolution viscosity in the case where a hydrocarbon based refrigerant is dissolved therein, and has a low solubility of a hydrocarbon based refrigerant, and a mixed composition for a refrigerator containing the refrigerator oil composition. The problem is solved by a refrigerator oil composition that is used with a refrigerant containing a hydrocarbon based refrigerant, the refrigerator oil composition containing one or more kind of a polyol ester compound (X) selected from the group consisting of a complete ester and a partial ester of a particular pentaerythritol based compound (A) and a fatty acid (B), the fatty acid (B) containing a short-chain fatty acid (B 1) having 2 or more and 9 or less carbon atoms, the short-chain fatty acid (B 1) containing a particular linear short-chain fatty acid (B 1-1), the fatty acid (B) having a content of the short-chain fatty acid (B 1) of more than 50% by mol based on the total amount of the fatty acid (B).

## Description

### Technical Field

The present invention relates to a refrigerator oil composition and a mixed composition for a refrigerator.

In the description herein, the "mixed composition for a refrigerator" means a composition containing a "refrigerator oil composition" and a "refrigerant" mixed with each other.

### Background Art

A refrigerator, such as a compression refrigerator, generally includes at least a compressor, a condenser, an expansion mechanism (such as an expansion valve), and an evaporator, and has a structure in which a mixed composition for a refrigerator is circulated within the sealed system.

As a refrigerant used in a refrigerator, such as a compression refrigerator, a fluorinated hydrocarbon compound having a low environmental load is being used in place of a hydrochlorofluorocarbon (HCFC) having been widely used. Examples of the fluorinated hydrocarbon compound include a saturated fluorinated hydrocarbon compound (hydrofluorocarbon, which may be hereinafter referred to as "HFC"), such as 1,1,1,2-tetrafluoroethane (R134a), difluoromethane (R32), 1,1-difluoroethane (R152a), and a mixture of difluoromethane and pentafluoroethane (R410A).

The use of an unsaturated fluorinated hydrocarbon compound (hydrofluoroolefin, which may be hereinafter referred to as "HFO"), such as 1,3,3,3-tetrafluoropropene (R1234ze), 2,3,3,3-tetrafluoropropene (R1234yf), and 1,2,3,3-tetrafluoropropene (R1234ye), having a low global warming potential (GWP) is also being investigated.

In recent years, the use of a hydrocarbon based refrigerant, such as propane (R290), is also being investigated from the standpoint of further reducing the global warming potential (GWP) (see, for example, PTL 1).

### Citation List

### Patent Literature

PTL 1: JP 2004-043611 A

### Summary of Invention

### Technical Problem

A hydrocarbon based refrigerant tends to provide a lower viscosity of a mixed composition for a refrigerator containing the refrigerant dissolved in a refrigerator oil composition (which may be hereinafter referred to as a "dissolution viscosity"), as compared to an HFC refrigerant and an HFO refrigerant. The decrease of the dissolution viscosity becomes a factor of the progress of wear in a sliding part of the compressor and the like in the refrigerator. Therefore, the refrigerator oil composition that is used with a hydrocarbon based refrigerant is demanded to have an appropriate dissolution viscosity for exhibiting good lubricity in the case where a hydrocarbon based refrigerant is dissolved therein.

A hydrocarbon based refrigerant is highly flammable. Therefore, the used amount of a hydrocarbon based refrigerant is desirably reduced from the standpoint of facilitating the securement of the safety. Accordingly, the refrigerator oil composition that is used with a hydrocarbon based refrigerant is demanded to have a reduced dissolution amount of the hydrocarbon based refrigerant, so as to suppress the excessive dissolution of the hydrocarbon based refrigerant. From the standpoint of achieving the demand, the refrigerator oil composition that is used with a hydrocarbon based refrigerant is demanded to have a low solubility of a hydrocarbon based refrigerant.

However, the refrigerator oil composition of PTL 1 is insufficient in all the capabilities.

Under the circumstances, a problem to be solved by the present invention is to provide a refrigerator oil composition that has an appropriate dissolution viscosity in the case where a hydrocarbon based refrigerant is dissolved therein, and has a low solubility of a hydrocarbon based refrigerant, and a mixed composition for a refrigerator containing the refrigerator oil composition.

### Solution to Problem

The present invention provides the following items [1] to [3].
[1] A refrigerator oil composition that is used with a refrigerant containing a hydrocarbon based refrigerant,
   the refrigerator oil composition containing one or more kind of a polyol ester compound (X) selected from the group consisting of a complete ester and a partial ester of a pentaerythritol based compound (A) represented by the following general formula (1) and a fatty acid (B): 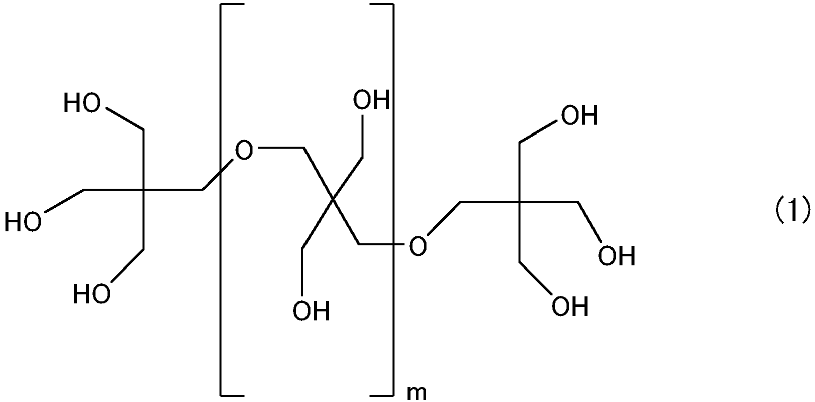 wherein in the general formula (1), m represents an integer of 0 or more and 4 or less,
   the fatty acid (B) containing a short-chain fatty acid (B1) having 2 or more and 9 or less carbon atoms,
   the short-chain fatty acid (B1) containing a linear short-chain fatty acid (B1-1) represented by the following general formula (2): 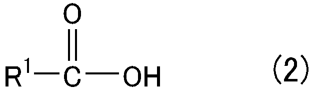 wherein in the general formula (2), R¹ represents a linear alkyl group having 1 or more and 8 or less carbon atoms or a linear alkenyl group having 2 or more and 8 or less carbon atoms,
   the fatty acid (B) having a content of the short-chain fatty acid (B 1) of more than 50% by mol based on the total amount of the fatty acid (B).
[2] A mixed composition for a refrigerator containing the refrigerator oil composition according to the item [1], and a refrigerant containing a hydrocarbon based refrigerant.
[3] A method of producing a refrigerator oil composition that is used with a refrigerant containing a hydrocarbon based refrigerant,
   the method of producing a refrigerator oil composition, including a step of mixing one or more kind of a polyol ester compound (X) selected from the group consisting of a complete ester and a partial ester of a pentaerythritol based compound (A) represented by the following general formula (1) and a fatty acid (B) obtained through reaction of the pentaerythritol based compound (A) and the fatty acid (B): 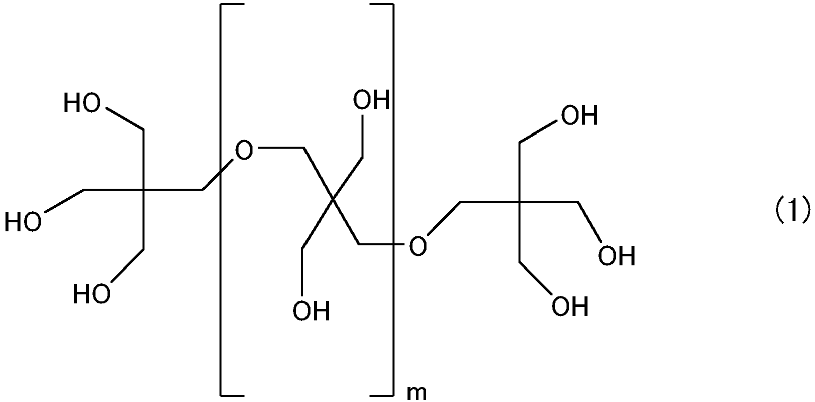 wherein in the general formula (1), m represents an integer of 0 or more and 4 or less,
   the fatty acid (B) containing a short-chain fatty acid (B1) having 2 or more and 9 or less carbon atoms,
   the short-chain fatty acid (B1) containing a linear short-chain fatty acid (B1-1) represented by the following general formula (2): 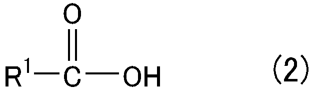 wherein in the general formula (2), R¹ represents a linear alkyl group having 1 or more and 8 or less carbon atoms or a linear alkenyl group having 2 or more and 8 or less carbon atoms,
   the fatty acid (B) having a content of the short-chain fatty acid (B 1) of more than 50% by mol based on the total amount of the fatty acid (B).

### Advantageous Effects of Invention

The present invention can provide a refrigerator oil composition that has an appropriate dissolution viscosity in the case where a hydrocarbon based refrigerant is dissolved therein, and has a low solubility of a hydrocarbon based refrigerant, and a mixed composition for a refrigerator containing the refrigerator oil composition.

### Brief Description of Drawings

Fig. 1 is a cross sectional view showing a viscosity measuring device used for measuring the dissolution viscosity in examples.
Fig. 2 is an enlarged cross sectional view showing an important part of the viscosity measuring device used for measuring the dissolution viscosity in the examples.
Fig. 3 is a cross sectional view showing a part of a measurement procedure with the viscosity measuring device used for measuring the dissolution viscosity in the examples.

### Description of Embodiments

In the description herein, the upper limit values and the lower limit values of the numerical ranges each can be optionally combined. For example, in the case where "A to B" and "C to D" are described as numerical ranges, the numerical ranges of "Ato D" and "C to B" are also encompassed in the scope of the present invention.

In the description herein, the numerical range of "lower limit value to upper limit value" means the lower limit value or more and the upper limit value or less unless otherwise indicated.

In the description herein, the numerical values in the examples are numerical values that can be used as an upper limit value or a lower limit value.

In the following description, the "polyol ester compound" may be abbreviated as a "POE compound" in some cases.

### [Embodiments of Refrigerator Oil Composition]

The refrigerator oil composition of the present embodiment is a refrigerator oil composition that is used with a refrigerant containing a hydrocarbon based refrigerant, and contains one or more kind of a polyol ester compound (X) selected from the group consisting of a complete ester and a partial ester of a pentaerythritol based compound (A) represented by the following general formula (1) and a fatty acid (B): 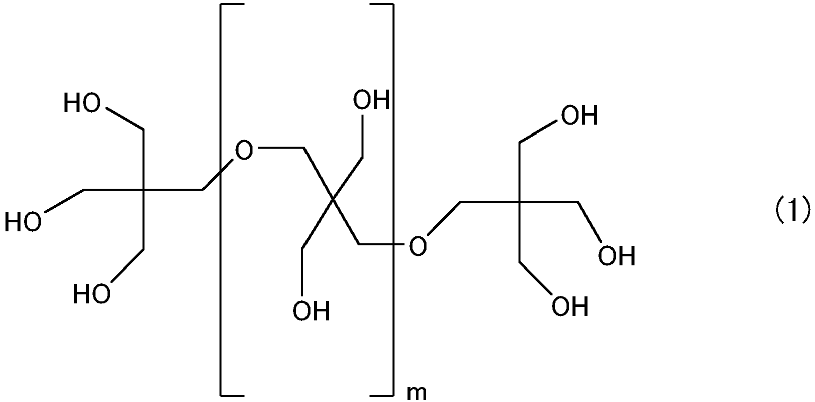 wherein in the general formula (1), m represents an integer of 0 or more and 4 or less.

The fatty acid (B) contains a short-chain fatty acid (B1) having 2 or more and 9 or less carbon atoms.

The short-chain fatty acid (B1) contains a linear short-chain fatty acid (B1-1) represented by the following general formula (2): 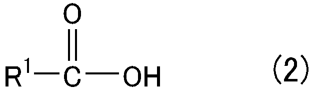 wherein in the general formula (2), R¹ represents a linear alkyl group having 1 or more and 8 or less carbon atoms or a linear alkenyl group having 2 or more and 8 or less carbon atoms.

The content of the short-chain fatty acid (B 1) is more than 50% by mol based on the total amount of the fatty acid (B).

The present inventors have made earnest investigations for solving the problem. As a result, it has been found that the POE compound (X) has an appropriate dissolution viscosity in the case where a hydrocarbon based refrigerant is dissolved therein, and has a low solubility of a hydrocarbon based refrigerant, and thus the present invention has been completed.

The mechanism for achieving the effects of the present invention is not clear, but for example, can be estimated as follows. Specifically, it can be estimated that the mechanism is derived from the molecular structure of the POE compound (X), which is excellent in balance for solving the problem.

In the refrigerator oil composition of the present embodiment, the POE compound (X) functions as a base oil.

The refrigerator oil composition of the present embodiment may be constituted only by the POE compound (X), and may contain a component other than the POE compound (X) in such a range that does not impair the effects of the present invention.

In the refrigerator oil composition of the present embodiment, the content of the POE compound (X) is preferably 80% by mass or more, more preferably 85% by mass or more, further preferably 90% by mass or more, still further preferably 95% by mass or more, still more further preferably 99% by mass or more, and even further preferably 100% by mass, based on the total amount (100% by mass) of the refrigerator oil composition. The content of the POE compound (X) may be 100% by mass or less based on the total amount (100% by mass) of the refrigerator oil composition.

The components contained in the refrigerator oil composition of the present embodiment and the like will be described in detail below.

### <POE Compound (X)>

The refrigerator oil composition of the present embodiment contains a POE compound (X).

The POE compound (X) is one or more kind selected from the group consisting of a complete ester and a partial ester of a pentaerythritol based compound (A) and a fatty acid (B).

The POE compound (X) may be a partial ester as described above, and in the case where the value of m in the general formula (1) is 1 or more, the number of groups derived from the fatty acid (B) is preferably 6 or more from the standpoint of suppressing the metal corrosion.

The POE compound (X) is preferably one or more kind selected from the group consisting of the complete ester from the standpoint of further facilitating the suppression of the metal corrosion.

In the case where the pentaerythritol based compound (A) constituting the POE compound (X) is dipentaerythritol (i.e., in the case where m in the general formula (1) is 0), the POE compound (X) may be a partial ester, and the number of groups derived from the fatty acid (B) is preferably 5 or more, and more preferably 6 (i.e., preferably the complete ester), from the same standpoint.

The pentaerythritol based compound (A) and the fatty acid (B) will be described in detail below.

### (Pentaerythritol based Compound (A))

The pentaerythritol based compound (A) is a compound represented by the following general formula (1).

One kind of the pentaerythritol based compound (A) may be used alone, or two or more kinds thereof may be used in combination.

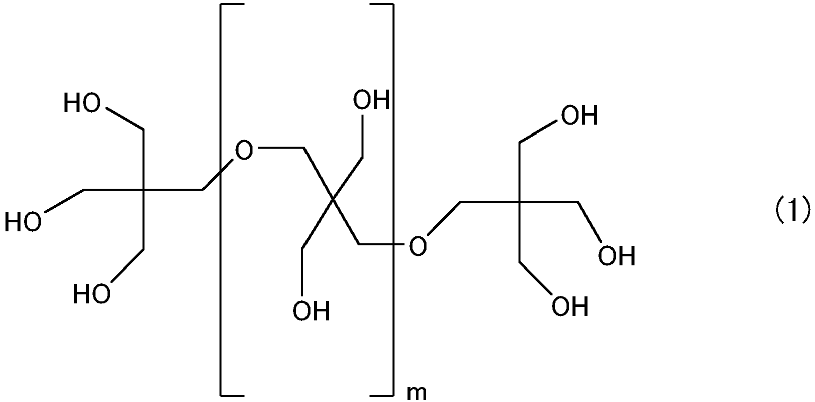

In the general formula (1), m represents an integer of 0 or more and 4 or less.

In the case where m is 5 or more, the viscosity of the POE compound (X) becomes too large, and thereby the viscosity of the POE compound (X) is difficult to regulate to the appropriate range.

The value of m is preferably 0 to 3, more preferably 0 to 2, further preferably 0 to 1, and still further preferably 0 (i.e., dipentaerythritol), from the standpoint of facilitating the regulation of the viscosity of the POE compound (X) to the appropriate range and the standpoint of facilitating the effects of the present invention.

### (Fatty Acid (B))

The fatty acid (B) contains a short-chain fatty acid (B 1) having 2 or more and 9 or less carbon atoms.

The content of the short-chain fatty acid (B 1) is more than 50% by mol based on the total amount of the fatty acid (B).

In the case where the content of the short-chain fatty acid (B 1) is 50% by mol or less based on the total amount of the fatty acid (B), the viscosity of the POE compound (X) is increased, and thereby the viscosity of the POE compound (X) is difficult to regulate to the appropriate range.

The content of the short-chain fatty acid (B 1) is preferably more than 50% by mol and 100% by mol or less, more preferably more than 50% by mol and 90% by mol or less, further preferably more than 50% by mol and 80% by mol or less, still further preferably 51% by mol to 70% by mol, and still more further preferably 52% by mol to 60% by mol, based on the total amount of the fatty acid (B), from the standpoint of facilitating the regulation of the viscosity of the POE compound (X) to the appropriate range.

The number of carbon atoms of the short-chain fatty acid (B 1) is preferably 3 to 7, and more preferably 3 to 6, from the standpoint of further facilitating the effects of the present invention.

The short-chain fatty acid (B 1) contains a linear short-chain fatty acid (B 1-1) represented by the following general formula (2): 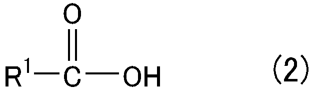 wherein in the general formula (2), R¹ represents a linear alkyl group having 1 or more and 8 or less carbon atoms or a linear alkenyl group having 2 or more and 8 or less carbon atoms.

In the case where the short-chain fatty acid (B 1) does not contain the linear short-chain fatty acid (B 1-1), the dissolution viscosity in the case where a hydrocarbon based refrigerant is dissolved in the POE compound (X) tends to decrease.

The content of the linear short-chain fatty acid (B1-1) is preferably 50% by mol to 100% by mol, more preferably 60% by mol to 100% by mol, further preferably 70% by mol to 100% by mol, still further preferably 80% by mol to 100% by mol, still more further preferably 90% by mol to 100% by mol, and even further preferably 95% by mol to 100% by mol, based on the total amount of the short-chain fatty acid (B 1), from the standpoint of further facilitating the suppression of the decrease of the dissolution viscosity in the case where a hydrocarbon based refrigerant is dissolved in the POE compound (X).

Examples of the linear alkyl group having 1 or more and 8 or less carbon atoms or the linear alkenyl group having 2 or more and 8 or less carbon atoms that can be selected as R¹ in the general formula (2) include a methyl group, an ethyl group, a n-propyl group, a n-butyl group, a n-pentyl group, a n-hexyl group, a n-heptyl group, a n-octyl group, an ethenyl group, a n-propenyl group, a n-butenyl group, a n-pentenyl group, a n-hexenyl group, a n-heptenyl group, and a n-octenyl group.

The number of the unsaturated bond and the position of the unsaturated bond of the alkenyl group are not particularly limited.

The number of carbon atoms of the linear alkyl group that can be selected as R¹ is preferably 2 to 6, and more preferably 2 to 5, from the standpoint of further facilitating the effects of the present invention. The number of carbon atoms of the linear alkenyl group that can be selected as R¹ is preferably 2 to 6, and more preferably 2 to 5, from the same standpoint.

The fatty acid (B) preferably further contains a long-chain fatty acid (B2) having 10 or more and 24 or less carbon atoms.

In the case where the fatty acid (B) further contains the long-chain fatty acid (B2), the decrease of the dissolution viscosity in the case where a hydrocarbon based refrigerant is dissolved in the POE compound (X) can be further easily suppressed, and simultaneously the suppression of the decrease of the solubility of a hydrocarbon based refrigerant in the POE compound (X) can be facilitated.

The content of the long-chain fatty acid (B2) is preferably 10% by mol or more and less than 50% by mol, more preferably 20% by mol or more and less than 50% by mol, further preferably 30% by mol to 49% by mol, and still further preferably 40% by mol to 48% by mol, based on the total amount of the fatty acid (B), from the standpoint of facilitating the suppression of the decrease of the dissolution viscosity in the case where a hydrocarbon based refrigerant is dissolved in the POE compound (X), and the standpoint of facilitating the decrease of the solubility of a hydrocarbon based refrigerant in the POE compound (X).

The number of carbon atoms of the long-chain fatty acid (B2) is preferably 12 to 22, more preferably 14 to 20, and further preferably 16 to 20, from the standpoint of further facilitating the effects of the present invention.

The long-chain fatty acid (B2) preferably contains a linear long-chain fatty acid (B2-1) represented by the following general formula (3): 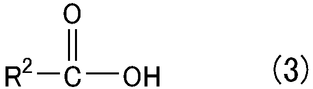 wherein in the general formula (3), R² represents a linear alkyl group having 9 or more and 23 or less carbon atoms or a linear alkenyl group having 9 or more and 23 or less carbon atoms.

In the case where the long-chain fatty acid (B2) contains the linear long-chain fatty acid (B2-1), the decrease of the dissolution viscosity in the case where a hydrocarbon based refrigerant is dissolved in the POE compound (X) can be further easily suppressed.

The content of the linear long-chain fatty acid (B2-1) is preferably 50% by mol to 100% by mol, more preferably 60% by mol to 100% by mol, further preferably 70% by mol to 100% by mol, still further preferably 80% by mol to 100% by mol, still more further preferably 90% by mol to 100% by mol, and even further preferably 95% by mol to 100% by mol, based on the total amount of the long-chain fatty acid (B2), from the standpoint of further facilitating the suppression of the decrease of the dissolution viscosity in the case where a hydrocarbon based refrigerant is dissolved in the POE compound (X).

Examples of the linear alkyl group having 9 or more and 23 or less carbon atoms or the linear alkenyl group having 9 or more and 23 or less carbon atoms that can be selected as R² in the general formula (3) include a n-nonyl group, a n-decyl group, a n-undecyl group, a n-dodecyl group, a n-tridecyl group, a n-tetradecyl group, a n-pentadecyl group, a n-hexadecyl group, a n-heptadecyl group, a n-octadecyl group, a n-nonadecyl group, a n-icosyl group, a n-henicosyl group, a n-docosyl group, a n-tricosyl group, a n-nonenyl group, a n-decenyl group, a n-undecenyl group, a n-dodecenyl group, a n-tridecenyl group, a n-tetradecenyl group, a n-pentadecenyl group, a n-hexadecenyl group, a n-heptadecenyl group, a n-octadecenyl group, a n-nonadecenyl group, a n-icosenyl group, a n-henicosenyl group, a n-docosenyl group, and a n-tricosenyl group.

The number of the unsaturated bond and the position of the unsaturated bond of the alkenyl group are not particularly limited.

The number of carbon atoms of the linear alkyl group or the linear alkenyl group that can be selected as R² is preferably 11 to 21, more preferably 13 to 19, and further preferably 15 to 19, from the standpoint of further facilitating the effects of the present invention.

The group that can be selected as R² in the general formula (3) is preferably a linear alkenyl group having 9 or more and 23 or less carbon atoms from the standpoint of facilitating the securement of the low temperature fluidity.

In the present embodiment, in the case where the fatty acid (B) further contains the long-chain fatty acid (B2) having 10 or more and 24 or less carbon atoms, the content ratio of the short-chain fatty acid (B1) having 2 or more and 9 or less carbon atoms and the long-chain fatty acid (B2) having 10 or more and 24 or less carbon atoms ((B1)/(B2)) in terms of molar ratio is preferably more than 1.0, more preferably 1.1 or more, and further preferably 1.2 or more, and is preferably 2.0 or less, more preferably 1.7, and further preferably 1.5 or less.

The upper limit values and the lower limit values of these numerical ranges each can be optionally combined. Specifically, the content ratio thereof is preferably more than 1.0 and 2.0 or less, more preferably 1. 1 to 1.7, and further preferably 1.2 to 1.5.

### <Preferred Embodiment of POE Compound (X)>

In the present embodiment, the POE compound (X) is preferably the following embodiment from the standpoint of further facilitating the effects of the present invention.

Specifically, the POE compound (X) is preferably a complete ester of the pentaerythritol based compound (A) represented by the general formula (1), in which m = 0 (i.e., dipentaerythritol), and the fatty acid (B).

The preferred ranges of the fatty acid (B) are as described above.

### <Method of producing POE Compound (X)>

The method of producing the POE compound (X) is not particularly limited, and the POE compound (X) can be produced, for example, by reacting the pentaerythritol based compound (A) represented by the general formula (1) and the fatty acid (B) for performing esterification by the ordinary method.

### <Kinematic Viscosity of POE Compound (X)>

The kinematic viscosity at 40°C of the POE compound (X) is preferably 20 mm²/s or more, more preferably 30 mm²/s or more, and further preferably 40 mm²/s or more, from the standpoint of suppressing the wear of the sliding part of the compressor and the like in the refrigerator, and is preferably 350 mm²/s or less, more preferably 320 mm²/s or less, and further preferably 300 mm²/s or less, from the standpoint of the oil return capability.

The upper limit values and the lower limit values of these numerical ranges each can be optionally combined. Specifically, the kinematic viscosity at 40°C thereof is preferably 20 mm²/s to 350 mm²/s, more preferably 30 mm²/s to 320 mm²/s, and further preferably 40 mm²/s to 300 mm²/s.

The kinematic viscosity at 100°C of the POE compound (X) is preferably 4 mm²/s or more, more preferably 6 mm²/s or more, further preferably 8 mm²/s or more, and still further preferably 9 mm²/s or more, from the standpoint of suppressing the wear of the sliding part of the compressor and the like in the refrigerator, and is preferably 70 mm²/s or less, more preferably 60 mm²/s or less, and further preferably 50 mm²/s or less, from the standpoint of the oil return capability.

The upper limit values and the lower limit values of these numerical ranges each can be optionally combined. Specifically, the kinematic viscosity at 100°C thereof is preferably 4 mm²/s to 70 mm²/s, more preferably 6 mm²/s to 70 mm²/s, further preferably 8 mm²/s to 60 mm²/s, and still further preferably 9 mm²/s to 50 mm²/s.

In the description herein, the kinematic viscosity of the POE compound (X) means a value that is measured according to JIS K2283:2000.

### <Viscosity Index of POE Compound (X)>

The viscosity index of the POE compound (X) is preferably 110 or more, more preferably 120 or more, further preferably 130 or more, still further preferably 140 or more, and still more further preferably 150 or more, from the standpoint of facilitating the enhancement of the viscosity characteristics of the POE compound (X) (in other words, the standpoint of facilitating the regulation of the viscosity to the appropriate range over a wide range of temperature). The upper limit value of the viscosity index of the POE compound (X) is not particularly limited, and is generally 300 or less.

### <Base Oil other than POE Compound (X)>

The refrigerator oil composition of the present embodiment may further contain or may not contain a base oil other than the POE compound (X).

Examples of the base oil other than the POE compound (X) include one or more kind selected from the group consisting of a mineral oil and a synthetic oil that is not encompassed in the POE compound (X).

Examples of the mineral oil include an atmospheric residual oil obtained by subjecting a crude oil, such as a paraffin based crude oil, an intermediate based crude oil, and a naphthene based crude oil, to atmospheric distillation; a distillate oil obtained by subjecting the atmospheric residual oil to distillation under reduced pressure; a mineral oil obtained by subjecting the distillate oil to one or more treatment of solvent deasphalting, solvent extraction, hydrocracking, solvent dewaxing, catalytic dewaxing, hydrorefining, and the like; and a wax isomerization mineral oil.

One kind of the mineral oil may be used alone, or two or more kinds thereof may be used in combination.

Examples of the synthetic oil that is not encompassed in the POE compound (X) include a polyvinyl ether compound; a polyalkylene glycol compound; a copolymer of a polyalkylene glycol or a monoether thereof and a polyvinyl ether; a polyol ester compound that is not encompassed in the POE compound (X); a polyester compound; a polycarbonate compound; a hydrogenated product of an α-olefin oligomer; an alicyclic hydrocarbon compound; an alkylated aromatic hydrocarbon compound; and a GTL base oil produced through isomerization of GTL wax (gas-to-liquid wax) produced through the Fischer-Tropsch process or the like.

One kind of the synthetic oil may be used alone, or two or more kinds thereof may be used in combination.

The content of the mineral oil is preferably small from the standpoint of facilitating the effects of the present invention. Specifically, the content of the mineral oil is preferably less than 10 parts by mass, more preferably less than 1 part by mass, and further preferably less than 0.1% by mass, per 100 parts by mass of the POE compound (X), and it is still further preferred that the mineral oil is not contained.

The content of the synthetic oil that is not encompassed in the POE compound (X) is preferably small from the same standpoint. Specifically, the content of the synthetic oil that is not encompassed in the POE compound (X) is preferably less than 100 parts by mass, more preferably less than 50 parts by mass, further preferably less than 30 parts by mass, still further preferably less than 10 parts by mass, still more further preferably less than 1 part by mass, and even further preferably less than 0.1 part by mass, per 100 parts by mass of the POE compound (X), and it is even still further preferred that the synthetic oil that is not encompassed in the POE compound (X) is not contained.

### <Additive>

The refrigerator oil composition of the present embodiment may further contain an additive in such a range that does not impair the effects of the present invention, or may not contain an additive.

Examples of the additive include the additives that have been generally mixed in refrigerator oil compositions.

Examples of the additive include one or more kind selected from the group consisting of an antioxidant, an oxygen scavenger, an acid scavenger, an extreme pressure agent, an oiliness agent, a metal deactivator, and an anti-foaming agent.

The total content of the additive is preferably 0% by mass to 10% by mass, more preferably 0.01% by mass to 5% by mass, and further preferably 0.1% by mass to 3% by mass, based on the total amount (100% by mass) of the refrigerator oil composition.

### (Antioxidant)

Examples of the antioxidant include a phenol based antioxidant, such as 2,6-di-tert-butyl-4-methylphenol, 2,6-di-tert-butyl-4-ethylphenol, and 2,2'-methylenebis(4-methyl-6-tertbutylphenol), and an amine based antioxidant, such as phenyl-α-naphthylamine and N,N'-diphenyl-p-phenylenediamine.

One kind of the antioxidant may be used alone, or two or more kinds thereof may be used in combination.

### (Oxygen Scavenger)

Examples of the oxygen scavenger include an aliphatic unsaturated compound and a terpene compound having a double bond.

The aliphatic unsaturated compound is preferably an unsaturated hydrocarbon, and specific examples thereof include an olefin; and a polyene, such as a diene and a triene. The olefin is preferably an α-olefin, such as 1-tetradecene, 1-hexadecene, and 1-octadecene, from the standpoint of the reactivity with oxygen.

The aliphatic unsaturated compound other than the above is preferably an unsaturated aliphatic alcohol having a conjugated double bond, such as vitamin A represented by the molecular formula C₂₀H₃₀O ((2E,4E,6E,8E)-3,7-dimethyl-9-(2,6,6-trimethylcyclohexen-1-yl)nona-2,4,6,8-tetraen-1-ol) from the standpoint of the reactivity with oxygen.

The terpene compound having a double bond is preferably a terpene based hydrocarbon having a double bond, and is more preferably α-farnesene (C₁₅H₂₄, 3,7,11-trimethyldodeca-1,3,6,10-tetraene) and β-farnesene (C₁₅H₂₄, 7,11-dimethyl-3-methylidenedodeca-1,6,10-triene) from the standpoint of the reactivity with oxygen.

One kind of the oxygen scavenger may be used alone, or two or more kinds thereof may be used in combination.

### (Acid Scavenger)

Examples of the acid scavenger include an epoxy compound, such as phenyl glycidyl ether, an alkyl glycidyl ether, an alkylene glycol glycidyl ether, cyclohexene oxide, an α-olefin oxide, and an epoxidized soybean oil, and in particular, at least one kind selected from a glycidyl ester, a glycidyl ether, and an α-olefin oxide is preferably used as the acid scavenger.

Examples of the glycidyl ether include glycidyl ethers derived from a linear, branched, or cyclic saturated or unsaturated aliphatic mono- or polyhydric alcohol having a number of carbon atoms that is generally 3 to 30, preferably 4 to 24, and more preferably 6 to 16, or an aromatic compound having one or more hydroxy group. In the case of an aliphatic polyhydric alcohol or an aromatic compound having two or more hydroxy groups, it is preferred that all of the hydroxy groups are glycidyl-etherified from the standpoint of preventing the hydroxyl value from being increased, for the stabilization of the lubricating oil composition.

Among these, a glycidyl ether derived from a linear, branched, or cyclic saturated aliphatic monoalcohol having 6 to 16 carbon atoms is particularly preferred. Examples of the glycidyl ether include 2-ethylethyl glycidyl ether, isononyl glycidyl ether, caprinoyl glycidyl ether, lauryl glycidyl ether, and myristyl glycidyl ether.

The α-olefin oxide used may have a number of carbon atoms that is generally 4 to 50, preferably 4 to 24, and more preferably 6 to 16.

One kind of the acid scavenger may be used alone, or two or more kinds thereof may be used in combination.

### (Extreme Pressure Agent)

Examples of the extreme pressure agent include a phosphorus based extreme pressure agent, such as a phosphate ester, an acidic phosphate ester, a phosphite ester, an acidic phosphite ester, and amine salts thereof.

In the phosphorus based extreme pressure agent, tricresyl phosphate, trithiophenyl phosphate, tri(nonylphenyl) phosphite, dioleyl hydrogen phosphite, 2-ethylhexyl diphenyl phosphite, and the like are particularly preferred from the standpoint of the extreme-pressure property, the friction property, and the like.

Examples of the extreme pressure agent also include a metal salt of a carboxylic acid. The metal salt of a carboxylic acid herein is preferably a metal salt of a carboxylic acid having 3 to 60 carbon atoms, more preferably a carboxylic acid having 3 to 30 carbon atoms, and particularly preferably a fatty acid having 12 to 30 carbon atoms. Examples thereof also include metal salts of a dimer acid and a trimer acid of the fatty acid described above, and a metal salt of a dicarboxylic acid having 3 to 30 carbon atoms. Among these, metal salts of a fatty acid having 12 to 30 carbon atoms and a dicarboxylic acid having 3 to 30 carbon atoms are particularly preferred.

The metal constituting the metal salt is preferably an alkali metal or an alkaline earth metal, and in particular, an alkali metal is most preferred.

Examples of the extreme pressure agent also include extreme pressure agents other than the above, for example, a sulfur based extreme pressure agent, such as a sulfurized fat or oil, a sulfurized fatty acid, a sulfurized ester, a sulfurized olefin, a dihydrocarbyl polysulfide, a thiocarbamate compound, a thioterpene compound, and a dialkyl thiodipropionate compound.

One kind of the extreme pressure agent may be used alone, or two or more kinds thereof may be used in combination.

### (Oiliness Agent)

Examples of the oiliness agent include an aliphatic saturated or unsaturated monocarboxylic acid, such as stearic acid and oleic acid, a polymerized fatty acid, such as a dimer acid and a hydrogenated dimer acid, a hydroxy fatty acid, such as ricinoleic acid and 12-hydroxystearic acid, an aliphatic saturated or unsaturated monoalcohol, such as lauryl alcohol and oleyl alcohol, an aliphatic saturated or unsaturated monoamine, such as stearylamine and oleylamine, an aliphatic saturated or unsaturated monocarboxylic amide, such as lauric amide and oleic amide, and a partial ester of a polyhydric alcohol, such as glycerin and sorbitol, and an aliphatic saturated or unsaturated monocarboxylic acid.

One kind of the oiliness agent may be used alone, or two or more kinds thereof may be used in combination.

### (Metal Deactivator)

Examples of the metal deactivator include a copper deactivator, such as N-[N,N'-dialkyl(e.g., an alkyl group having 3 to 12 carbon atoms)aminomethyl]triazole.

One kind of the metal deactivator may be used alone, or two or more kinds thereof may be used in combination.

### (Anti-foaming Agent)

Examples of the anti-foaming agent include a silicone oil and a fluorinated silicone oil.

One kind of the anti-foaming agent may be used alone, or two or more kinds thereof may be used in combination.

### [Method of producing Refrigerator Oil Composition]

The method of producing the refrigerator oil composition of the present embodiment is not particularly limited.

For example, the method of producing the refrigerator oil composition of the present embodiment may be a method of producing a refrigerator oil composition that is used with a refrigerant containing a hydrocarbon based refrigerant, including a step of mixing one or more kind of a POE compound (X) selected from the group consisting of a complete ester and a partial ester of a pentaerythritol based compound (A) represented by the following general formula (1) and a fatty acid (B) obtained through reaction of the pentaerythritol based compound (A) and the fatty acid (B): 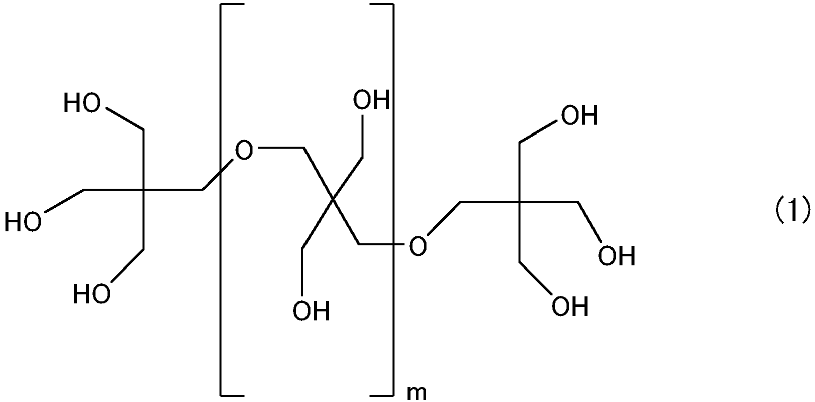 wherein in the general formula (1), m represents an integer of 0 or more and 4 or less.

The fatty acid (B) contains a short-chain fatty acid (B1) having 2 or more and 9 or less carbon atoms.

The short-chain fatty acid (B1) contains a linear short-chain fatty acid (B1-1) represented by the following general formula (2): 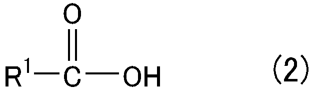 wherein in the general formula (2), R¹ represents a linear alkyl group having 1 or more and 8 or less carbon atoms or a linear alkenyl group having 2 or more and 8 or less carbon atoms.

The content of the short-chain fatty acid (B1) is more than 50% by mol based on the total amount of the fatty acid (B).

The POE compound (X) may be a partial ester as described above, and in the case where the value of m in the general formula (1) is 1 or more, the number of groups derived from the fatty acid (B) is preferably 6 or more from the standpoint of suppressing the metal corrosion.

The POE compound (X) is preferably one or more kind selected from the group consisting of the complete ester from the standpoint of further facilitating the suppression of the metal corrosion.

In the case where the pentaerythritol based compound (A) constituting the POE compound (X) is dipentaerythritol (i.e., in the case where the value of m in the general formula (1) is 0), the POE compound (X) may be a partial ester, and the number of groups derived from the fatty acid (B) is preferably 5 or more, and more preferably 6 (i.e., preferably the complete ester), from the same standpoint.

In the method of producing the refrigerator oil composition of the present embodiment, the fatty acid (B) preferably further contains a long-chain fatty acid (B2) having 10 or more and 24 or less carbon atoms.

Examples of the step of mixing one or more kind selected from a POE compound (X) represented by the general formula (1) include a step of mixing one or more kind selected from the POE compound (X) that is obtained by the method of producing the POE compound (X) described above.

The method of producing the refrigerator oil composition of the present embodiment may further include or may not include a step of mixing the POE compound (X) with a base oil other than the POE compound (X), and a step of mixing the additive.

In the case where the additive is mixed in the POE compound (X), the additive may be mixed in the form of a solution (or a dispersion) having a diluent oil or the like added in advance thereto.

The preferred embodiments of the pentaerythritol based compound (A) and the fatty acid (B) are as described above.

### [Properties of Refrigerator Oil Composition]

### <Kinematic Viscosity of Refrigerator Oil Composition>

The kinematic viscosity at 40°C of the refrigerator oil composition is preferably 20 mm²/s or more, more preferably 30 mm²/s or more, and further preferably 40 mm²/s or more, and is preferably 350 mm²/s or less, more preferably 320 mm²/s or less, and further preferably 300 mm²/s or less, from the standpoint of the oil return capability.

The upper limit values and the lower limit values of these numerical ranges each can be optionally combined. Specifically, the kinematic viscosity at 40°C thereof is preferably 20 mm²/s to 350 mm²/s, more preferably 30 mm²/s to 320 mm²/s, and further preferably 40 mm²/s to 300 mm²/s.

The kinematic viscosity at 100°C of the refrigerator oil composition is preferably 4 mm²/s or more, more preferably 6 mm²/s or more, further preferably 8 mm²/s or more, and still further preferably 9 mm²/s or more, from the standpoint of suppressing the wear of the sliding part of the compressor and the like in the refrigerator, and is preferably 70 mm²/s or less, more preferably 60 mm²/s or less, and further preferably 50 mm²/s or less, from the standpoint of the oil return capability.

The upper limit values and the lower limit values of these numerical ranges each can be optionally combined. Specifically, the kinematic viscosity at 100°C thereof is preferably 4 mm²/s to 70 mm²/s, more preferably 6 mm²/s to 70 mm²/s, further preferably 8 mm²/s to 60 mm²/s, and still further preferably 9 mm²/s to 50 mm²/s.

In the description herein, the kinematic viscosity of the refrigerator oil composition means a value that is measured according to JIS K2283:2000.

### <Dissolution Viscosity of Refrigerator Oil Composition in Case where Hydrocarbon based Refrigerant is dissolved therein>

The dissolution viscosity of the refrigerator oil composition in the case where a hydrocarbon based refrigerant is dissolved therein, which is measured by the method shown in the examples described later, is preferably 2.50 mm²/s or more, more preferably 3.00 mm²/s or more, further preferably 3.50 mm²/s or more, still further preferably 4.00 mm²/s or more, still more further preferably 4.50 mm²/s or more, and even further preferably 5.00 mm²/s or more, from the standpoint of suppressing the wear of the sliding part of the compressor and the like in the refrigerator, and is preferably 50 mm²/s or less.

The dissolution viscosity is a value that is measured in the state where a hydrocarbon based refrigerant is dissolved in the refrigerator oil composition. Therefore, the dissolution viscosity can also be considered as the viscosity of the mixed composition for a refrigerator that is measured by the method shown in the examples described later.

<Solubility of Hydrocarbon based Refrigerant in Refrigerator Oil Composition>

The solubility of a hydrocarbon based refrigerant in the refrigerator oil composition, which is measured by the method shown in the examples described later, is preferably less than 18.0% by mass, more preferably 17.0% by mass or less, further preferably 16.0% by mass or less, still further preferably 15.0% by mass or less, and still more further preferably less than 15.0% by mass, from the standpoint of suppressing the used amount of a hydrocarbon based refrigerant for facilitating the securement of the safety, and is preferably 1% by mass or more.

### [Mixed Composition for Refrigerator]

The refrigerator oil composition is mixed with a refrigerant and used as a mixed composition for a refrigerator.

Accordingly, the mixed composition for a refrigerator contains the refrigerator oil composition and a refrigerant.

The refrigerant will be described below.

### <Refrigerant>

### (Hydrocarbon based Refrigerant>

The refrigerant used in the present embodiment is a refrigerant containing a hydrocarbon based refrigerant.

The hydrocarbon based refrigerant is preferably a hydrocarbon having 1 or more and 8 or less carbon atoms, more preferably a hydrocarbon having 1 or more and 5 or less carbon atoms, and further preferably a hydrocarbon having 3 or more and 5 or less carbon atoms. A hydrocarbon having 8 or less carbon atoms is preferred since the boiling point of the refrigerant is not too high, which is preferred as a refrigerant. Examples of the hydrocarbon based refrigerant include one or more kind selected from the group consisting of methane, ethane, ethylene, propane (R290), cyclopropane, propylene, n-butane, isobutane (R600a), 2-methylbutane, n-pentane, isopentane, cyclopentane, isobutane, and n-hexane.

One kind of the hydrocarbon based refrigerant may be used alone, or two or more kinds thereof may be used in combination.

### (Additional Refrigerant)

In the present embodiment, the refrigerant may be a mixed refrigerant containing an additional refrigerant depending on necessity in addition to the hydrocarbon based refrigerant.

Examples of the additional refrigerant include one or more kind selected from a saturated fluorinated hydrocarbon refrigerant, an unsaturated fluorinated hydrocarbon refrigerant, carbon dioxide, and ammonia.

The saturated fluorinated hydrocarbon refrigerant and the unsaturated fluorinated hydrocarbon refrigerant will be described below.

### Saturated Fluorinated Hydrocarbon Refrigerant

The saturated fluorinated hydrocarbon refrigerant is preferably a fluorinated product of an alkane having 1 to 4 carbon atoms, more preferably a fluorinated product of an alkane having 1 to 3 carbon atoms, and further preferably a fluorinated product of an alkane having 1 or 2 carbon atoms (i.e., methane or ethane). Examples of the fluorinated product of methane or ethane include trifluoromethane (R23), difluoromethane (R32), 1,1-difluoroethane (R152a), 1,1,1-trifluoroethane (R143a), 1,1,2-trifluoroethane (R143), 1,1,1,2-tetrafluoroethane (R134a), 1,1,2,2-tetrafluoroethane (R134), and 1,1,1,2,2-pentafluoroethane (R125).

One kind of the compound may be used alone, or two or more kinds thereof may be used in combination.

### Unsaturated Fluorinated Hydrocarbon Refrigerant

Examples of the unsaturated fluorinated hydrocarbon refrigerant include a compound represented by the following general formula (3):

CₓF_{y}H_{z} (3)

wherein in the general formula (3), x represents an integer of 2 to 6, y represents an integer of 1 to 11, and z represents an integer of 1 to 11, provided that the molecule contains one or more carbon-carbon unsaturated bond.

The general formula (3) shows the kinds and the numbers of the elements in the molecule, and specifically represents an unsaturated fluorinated hydrocarbon compound having a number of carbon atoms C of 2 to 6. An unsaturated fluorinated hydrocarbon compound having a number of carbon atoms of 2 to 6 has physical and chemical properties, such as a boiling point, a freezing point, and an evaporation latent heat, which are demanded as a refrigerant.

In the general formula (3), examples of the bonding mode of the x carbon atoms represented by Cₓ include a carbon-carbon single bond and an unsaturated bond, such as a carbon-carbon double bond. The carbon-carbon unsaturated bond is preferably a carbon-carbon double bond from the standpoint of the stability, and an unsaturated fluorinated hydrocarbon compound has one or more unsaturated bond, such as a carbon-carbon double bond, in the molecule, in which the number thereof is preferably 1. Accordingly, it is more preferred that at least one of the bonding modes of the x carbon atoms represented by Cₓ is a carbon-carbon double bond.

Preferred examples of the unsaturated fluorinated hydrocarbon compound include fluorinated products of a linear or branched chain-like olefin having 2 to 6 carbon atoms and a cyclic olefin having 4 to 6 carbon atoms.

Specific examples thereof include a fluorinated product of ethylene having 1 to 3 fluorine atoms introduced thereto, a fluorinated product of propene having 1 to 5 fluorine atoms introduced thereto, a fluorinated product of butene having 1 to 7 fluorine atoms introduced thereto, a fluorinated product of pentene having 1 to 9 fluorine atoms introduced thereto, a fluorinated product of hexene having 1 to 11 fluorine atoms introduced thereto, a fluorinated product of cyclobutene having 1 to 5 fluorine atoms introduced thereto, a fluorinated product of cyclopentene having 1 to 7 fluorine atoms introduced thereto, and a fluorinated product of cyclohexene having 1 to 9 fluorine atoms introduced thereto.

Among these, a fluorinated product of propene is preferred, and propene having 3 to 5 fluorine atoms introduced thereto is more preferred. Specifically, one or more kind selected from 1,3,3,3-tetrafluoropropene (R1234ze), 2,3,3,3-tetrafluoropropene (R1234yf), and 1,2,3,3-tetrafluoropropene (R1234ye) is preferred, and 2,3,3,3-tetrafluoropropene (R1234yf) is more preferred.

One kind of the unsaturated fluorinated hydrocarbon refrigerant may be used alone, or two or more kinds thereof may be used in combination.

### (Content of Hydrocarbon based Refrigerant in Refrigerant)

In the present embodiment, the refrigerant contains the hydrocarbon based refrigerant.

The content of the hydrocarbon based refrigerant is preferably 20% by mass to 100% by mass, more preferably 30% by mass to 100% by mass, further preferably 40% by mass to 100% by mass, still further preferably 50% by mass to 100% by mass, still more further preferably 60% by mass to 100% by mass, even further preferably 70% by mass to 100% by mass, even still further preferably 80% by mass to 100% by mass, and even still more further preferably 90% by mass to 100% by mass, based on the total amount of the refrigerant.

### (Used Amounts of Refrigerant and Refrigerator Oil Composition)

In the mixed composition for a refrigerator of the present embodiment, the used amounts of the refrigerant and the refrigerator oil composition in terms of mass ratio of the refrigerator oil composition and the refrigerant ((refrigerator oil composition)/(refrigerant)) are preferably 30/70 to 90/10. In the case where the mass ratio of the refrigerator oil composition and the refrigerant is in the range, a lubricity and a favorable refrigeration capability in a refrigerator can be obtained.

### [Application of Refrigerator Oil Composition and Mixed Composition for Refrigerator]

The refrigerator oil composition and the mixed composition for a refrigerator of the present embodiment are preferably applied, for example, to a refrigeration system, a hot-water supply system, or an air heating system. Specific examples thereof include an air conditioner, a refrigerator, a freezer, an automatic vending machine, and a showcase. Examples of the air conditioner include a car air conditioner, such as an open type car air conditioner and an electric car air conditioner, and a gas heat pump (GHP) air conditioner.

### [Embodiment provided by Present Invention]

In one embodiment of the present invention, the following items [1] to [11] are provided.
[1] A refrigerator oil composition that is used with a refrigerant containing a hydrocarbon based refrigerant,
   the refrigerator oil composition containing one or more kind of a POE compound (X) selected from the group consisting of a complete ester and a partial ester of a pentaerythritol based compound (A) represented by the following general formula (1) and a fatty acid (B): 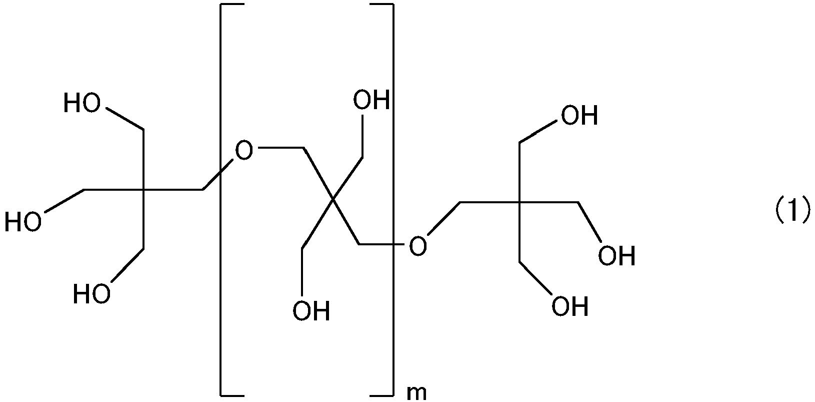 wherein in the general formula (1), m represents an integer of 0 or more and 4 or less,
   the fatty acid (B) containing a short-chain fatty acid (B1) having 2 or more and 9 or less carbon atoms,
   the short-chain fatty acid (B1) containing a linear short-chain fatty acid (B1-1) represented by the following general formula (2): 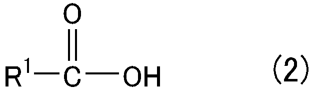 wherein in the general formula (2), R¹ represents a linear alkyl group having 1 or more and 8 or less carbon atoms or a linear alkenyl group having 2 or more and 8 or less carbon atoms,
   the fatty acid (B) having a content of the short-chain fatty acid (B 1) of more than 50% by mol based on the total amount of the fatty acid (B).
[2] The refrigerator oil composition according to the item [1], wherein in the case where m in the general formula (1) is 1 or more, the partial ester has a number of groups derived from the fatty acid (B) of 6 or more.
[3] The refrigerator oil composition according to the item [1], wherein the polyol ester compound (X) is one or more kind selected from the group consisting of the complete ester.
[4] The refrigerator oil composition according to any one of the items [1] to [3], wherein the fatty acid (B) further contains a long-chain fatty acid (B2) having 10 or more and 24 or less carbon atoms.
[5] The refrigerator oil composition according to the item [4], wherein the long-chain fatty acid (B2) contains a linear long-chain fatty acid (B2-1) represented by the following general formula (3): 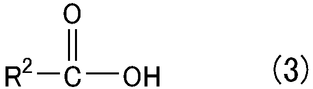 wherein in the general formula (3), R² represents a linear alkyl group having 9 or more and 23 or less carbon atoms or a linear alkenyl group having 9 or more and 23 or less carbon atoms.
[6] The refrigerator oil composition according to the item [5], wherein in the general formula (3), R² represents a linear alkenyl group having 9 or more and 23 or less carbon atoms.
[7] The refrigerator oil composition according to any one of the items [1] to [6], wherein the refrigerator oil composition has a content of the POE compound (X) of 80% by mass or more based on the total amount of the refrigerator oil composition.
[8] The refrigerator oil composition according to any one of the items [1] to [7], wherein the hydrocarbon based refrigerant is a hydrocarbon having 1 or more and 8 or less carbon atoms.
[9] A mixed composition for a refrigerator containing the refrigerator oil composition according to any one of the items [1] to [8], and a refrigerant containing a hydrocarbon based refrigerant.
[10] A method of producing a refrigerator oil composition that is used with a refrigerant containing a hydrocarbon based refrigerant,
   the method of producing a refrigerator oil composition, including a step of mixing one or more kind of a polyol ester compound (X) selected from the group consisting of a complete ester and a partial ester of a pentaerythritol based compound (A) represented by the following general formula (1) and a fatty acid (B) obtained through reaction of the pentaerythritol based compound (A) and the fatty acid (B): 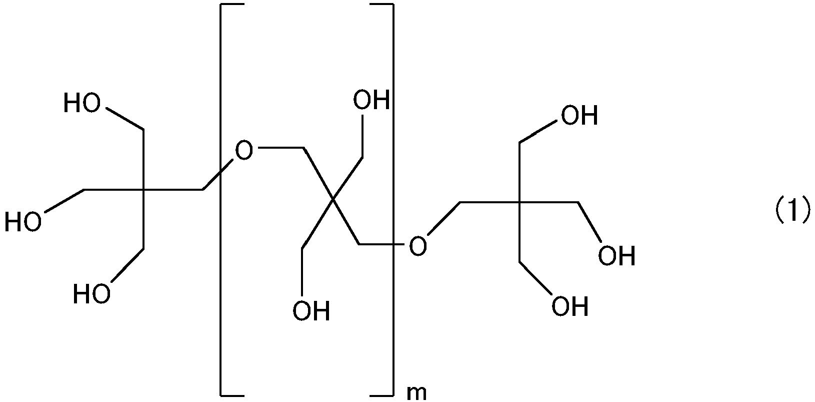 wherein in the general formula (1), m represents an integer of 0 or more and 4 or less,
   the fatty acid (B) containing a short-chain fatty acid (B1) having 2 or more and 9 or less carbon atoms,
   the short-chain fatty acid (B1) containing a linear short-chain fatty acid (B1-1) represented by the following general formula (2): 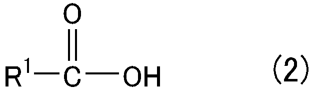 wherein in the general formula (2), R¹ represents a linear alkyl group having 1 or more and 8 or less carbon atoms or a linear alkenyl group having 2 or more and 8 or less carbon atoms,
   the fatty acid (B) having a content of the short-chain fatty acid (B1) of more than 50% by mol based on the total amount of the fatty acid (B).
[11] The method of producing a refrigerator oil composition according to the item [10], wherein in the case where m in the general formula (1) is 1 or more, the partial ester has a number of groups derived from the fatty acid (B) of 6 or more.
[12] The method of producing a refrigerator oil composition according to the item [10], wherein the polyol ester compound (X) is one or more kind selected from the group consisting of the complete ester.
[13] The method of producing a refrigerator oil composition according to any one of the items [10] to [12], wherein the fatty acid (B) further contains a long-chain fatty acid (B2) having 10 or more and 24 or less carbon atoms.

### Examples

The present invention will be described more specifically with reference to examples below. However, the present invention is not limited to the examples.

### [Measurement Methods of Property Values]

The properties of the raw materials used in Examples and Comparative Examples and the refrigerator oil compositions of Examples and Comparative Examples were measured according to the following procedures.

### (1) Kinematic Viscosity

The kinematic viscosity at 40°C, the kinematic viscosity at 80°C, and the kinematic viscosity at 100°C were measured according to JIS K2283:2000.

### (2) Viscosity Index

The viscosity index was calculated based on the measurement results of the kinematic viscosity according to JIS K2283:2000.

### [Production Examples 1 and 2 and Comparative Production Example 1]

POE compounds were synthesized in Production Examples 1 and 2 and Comparative Production Example 1 below.

### <Production Example 1: Synthesis of POE Compound (X)-1>

In a flask equipped with a Dean-Stark apparatus, 76.2 g (0.3 mol) of dipentaerythritol, 88.0 g (1.19 mol) of propionic acid, 280.9 g (0.974 mol) of oleic acid, 134 g of toluene, and 4.5 g of p-toluenesulfonic acid were placed and reacted at 150°C to 200°C. The reaction was terminated after forming the prescribed amount of water, and the reaction mixture was subjected to alkali cleaning with a 3% NaOH aqueous solution, and then cleaned with distilled water until neutral. Toluene was distilled off from the resulting oil layer, so as to provide a POE compound (X)-1, a complete ester of dipentaerythritol, propionic acid and oleic acid.

Dipentaerythritol is a pentaerythritol based compound represented by the general formula (1), in which m = 0.

Propionic acid is a linear short-chain fatty acid represented by the general formula (2), in which R¹ represents an ethyl group.

Oleic acid is a linear long-chain fatty acid represented by the general formula (3), in which R² represents an 8-heptadecenyl group.

The ratio of propionic acid and oleic acid charged was 55/45 in terms of molar ratio.

### <Production Example 2: Synthesis of POE Compound (X)-2>

A POE compound (X)-2, a complete ester of dipentaerythritol and n-hexanoic acid and oleic acid, was provided under the same condition as in Production Example 1 except that 138.2 g (1.19 mol) of n-hexanoic acid was added instead of propionic acid.

n-Hexanoic acid is a linear short-chain fatty acid represented by the general formula (2), in which R¹ represents a n-pentyl group.

The ratio of n-hexanoic acid and oleic acid charged was 55/45 in terms of molar ratio.

### <Comparative Production Example 1: Synthesis of POE Compound (X')-1>

A POE compound (X')-1, a complete ester of dipentaerythritol and 2-ethylhexanoic acid, was provided under the same condition as in Production Example 1 except that 311.5 g (2.16 mol) of 2-ethylhexanoic acid was added instead of propionic acid and oleic acid.

2-Ethylhexaoic acid is a branched short-chain fatty acid represented by the general formula (2), in which R¹ represents a 1-ethylpentyl group.

### [Examples 1 and 2 and Comparative Examples 1 to 8]

In Examples 1 and 2 and Comparative Examples 1 to 8, the following compounds and the like were used as a refrigerator oil composition, and subjected to the evaluation described later.
- Example 1: POE compound (X)-1 obtained in Production Example 1
- Example 2: POE compound (X)-2 obtained in Production Example 2
- Comparative Example 1: POE compound (X')-1 obtained in Comparative Production Example 1
- Comparative Example 2: POE compound (X')-2

A complete ester of pentaerythritol and 3,5,5-trimethylhexanoic acid was used as the POE compound (X')-2
- Comparative Example 3: Mixture of POE compound (X')-2 and POE compound (X')-3

A partial ester of pentaerythritol and propionic acid (number of hydroxy group: 1) was used as the POE compound (X')-3.

A mixture of the POE compound (X')-2 and the POE compound (X')-3 was used.

The mixing ratio of the POE compound (X')-2 and the POE compound (X')-3 was 85/15 in terms of mass ratio.
- Comparative Example 4: POE compound (X')-4

A complete ester of pentaerythritol, 3,5,5-trimethylhexanoic acid and 2-ethylhexanoic acid was used as the POE compound (X')-4.

In the POE compound (X')-4, the ratio of 3,5,5-trimethylhexanoic acid and 2-ethylhexanoic acid charged was 50/50 in terms of molar ratio.
- Comparative Example 5: POE compound (X')-5

A complete ester of pentaerythritol, n-octanoic acid, n-decanoic acid and 2-ethylhexanoic acid was used as the POE compound (X')-5.
- Comparative Example 6: POE compound (X')-6

A complete ester of dipentaerythritol, pentaerythritol, 3,5,5-trimethylhexanoic acid and 2-ethylhexanoic acid was used as the POE compound (X')-6.

In the POE compound (X')-6, the ratio of dipentaerythritol and pentaerythritol charged was 1/6 in terms of molar ratio.

In the POE compound (X')-6, the ratio of 3,5,5-trimethylhexanoic acid and 2-ethylhexanoic acid charged was 52/48 in terms of molar ratio.
- Comparative Example 7: mineral oil
- Comparative Example 8: poly-α-olefin (PAO)

### <Evaluation: Evaluation of Dissolution Viscosity and Solubility>

### (Evaluation of Solubility)

Prescribed amounts of the refrigerator oil composition and R290 as a refrigerant were injected into a pressure tight container made of sapphire glass, and the temperature of the pressure tight container was raised from room temperature (23°C) to 80°C. A temperature-pressure-solubility curve was prepared by calculation based on the volume of the refrigerator oil composition having R290 dissolved therein and the pressure at that time. The solubility (% by mass) of R290 in the refrigerator oil composition at 80°C and 2.0 MPa was calculated from the prepared solubility curve.

### (Evaluation of Dissolution Viscosity)

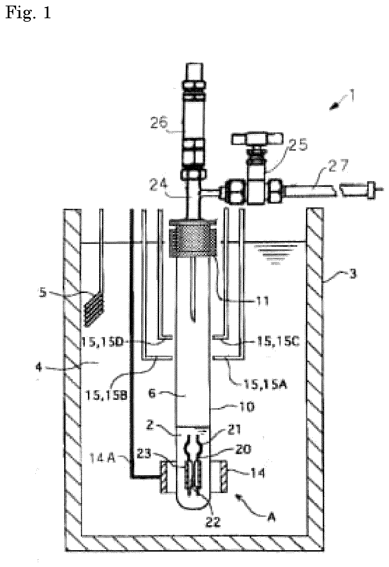

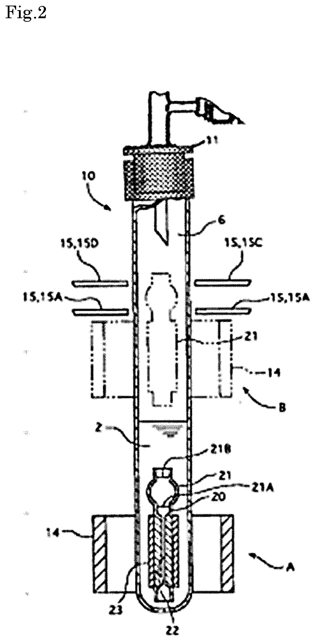

The dissolution viscosity of the refrigerator oil composition having a refrigerant dissolved therein was measured by using a viscosity measuring device 1 shown in Figs. 1 to 3.

A prescribed amount of the refrigerator oil composition 2 and a capillary viscometer 20 were placed in a container 10 made of a sapphire glass tube, which was then closed with a lid 11. A safety valve 26 and a needle valve 25 were attached to a T-joint 24, and the container 10 was immersed in a thermostat chamber 3 filled with a heating medium 4. The temperature of the heating medium 4 was retained to 80°C with a temperature regulation means 5.

Subsequently, the needle valve 25 and a refrigerant collection line (not shown in the figures) were connected through a pressure resistant hose 27, and the interior of the container 10 and the refrigerant collection line was evacuated to approximately 13.3 Pa with a vacuum pump (not shown in the figures). After completing the evacuation, the vacuum pump was stopped, and a main valve of a refrigerant container was opened to introduce the refrigerant (R290) to the container 10. The refrigerant was introduced to make a pressure of the container 10 of 2.0 MPa.

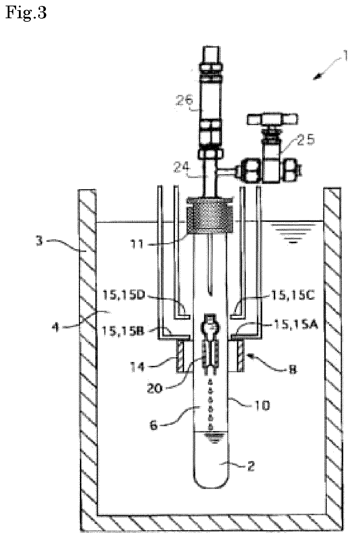

After introducing the refrigerant, the needle valve 25 was closed, the valve of the refrigerant container was closed, and after releasing the pressure resistant hose 27, the sealed container 10 was disposed at the prescribed position inside the thermostat chamber 3, in which a permanent magnet 14 had been allowed to descend to a position A. After the entire container 10 reached the thermal equilibrium condition, a driving means for moving the permanent magnet 14 was started to move the permanent magnet 14, and thereby the capillary viscometer 20 was allowed to rise to a position B. According to the procedure, as shown in Fig. 3, the refrigerator oil composition 2 having the refrigerant dissolved therein was dropped from the capillary viscometer 20, and thus the fluid level of the refrigerator oil composition 2 having the refrigerant dissolved therein was descending. The passage of the fluid level of the refrigerator oil composition 2 having the refrigerant dissolved therein at a gauge line 21B and a gauge line 21A was detected with optical fibers 15 (15A, 15B, 15C, 15D), thereby automatically measuring the period of time of passing the refrigerator oil composition 2 having the refrigerant dissolved therein through the interior of a capillary 22 with a viscosity calculator, and simultaneously the viscosity was automatically measured thereby, so as to measure the dissolution viscosity. The dissolution viscosity was measured after confirming that the refrigerant and the refrigerator oil composition were not separated from each other.

In Figs. 1 to 3, numeral 6 denotes a gas charged in the container 10, numeral 14A denotes an arm retaining the permanent magnet 14, numeral 21 denotes a liquid reservoir, and numeral 23 denotes a belt-like outer ring made of a magnetic material fixed to the outer circumferential surface of the side wall of the capillary 22.

The evaluation standard of the dissolution viscosity was as follows, in which the grades A and B were acceptable.
Grade A: exceeding 3.50 mm²/s
Grade B: 2.50 mm²/s or more and 3.5 mm²/s or less
Grade C: less than 2.50 mm²/s

A higher dissolution viscosity can provide good lubricity in the case where a hydrocarbon based refrigerant is dissolved therein, and thus can be considered as an appropriate dissolution viscosity provided.

The evaluation standard of the solubility was as follows, in which the grades A and B were acceptable.
Grade A: less than 15.0% by mass
Grade B: 15.0% by mass or more and less than 18.0% by mass
Grade C: 18.0% by mass or more

A lower solubility facilitates the regulation of the dissolution of a hydrocarbon based refrigerant.

The results are shown in Table 1.

**Table 1**

| | | | Example 1 | Example 2 | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|---|---|---|---|
| Base oil | | | POE compound (X)-1 | POE compound (X)-2 | POE compound (X')-1 | POE compound (X')-2 | POE compound (X')-2 + POE compound (X')-3 | POE compound (X')-4 | POE compound (X')-5 | POE compound (X')-6 | Mineral oil | PAO |
| Properties | Kinematic viscosity | 40°C | 90.41 | 80.36 | 128.10 | 110.80 | 81.01 | 66.71 | 32.79 | 84.05 | 52.84 | 64.32 |
| | Kinematic viscosity | 80°C | 22.93 | 21.74 | 24.32 | 19.99 | 16.03 | 14.01 | 9.23 | 15.76 | 10.23 | 15.96 |
| | Kinematic viscosity | 100°C | 13.99 | 13.53 | 13.69 | 11.17 | 9.23 | 8.23 | 5.91 | 9.66 | 5.94 | 9.76 |
| | Viscosity index | | 159 | 172 | 103 | 83 | 87 | 89 | 126 | 91 | 21 | 134 |
| Evaluation results | Condition: 80°C, 2.0 MPa | Dissolution viscosity | 5.791 | 5.617 | 2.484 | 2.067 | 2.091 | 2.108 | 1.878 | 1.786 | 1.294 | 1.998 |
| | | Evaluation of dissolution viscosity | A | A | C | C | C | C | C | C | C | C |
| | | Solubility | 12.2 | 12.2 | 17.0 | 18.5 | 17.2 | 16.3 | 15.3 | 19.8 | 22.3 | 22.2 |
| | | Evaluation of solubility | A | A | B | C | B | B | B | C | C | C |

The following can be understood from Table 1.

It is understood that the POE compounds of Examples 1 and 2 each have a high dissolution viscosity in the case where a hydrocarbon based refrigerant is dissolved therein, and a low solubility of a hydrocarbon based refrigerant.

On the other hand, it is understood that the POE compounds of Comparative Examples 1 to 6, the mineral oil of Comparative Example 7, and the PAO of Comparative Example 8 each have a low dissolution viscosity in the case where a hydrocarbon based refrigerant is dissolved therein. In addition, the POE compounds of Comparative Examples 2 and 6, the mineral oil of Comparative Example 7, and the PAO of Comparative Example 8 each have a high solubility of a hydrocarbon based refrigerant.

## Claims

1. A refrigerator oil composition that is used with a refrigerant containing a hydrocarbon based refrigerant,
the refrigerator oil composition comprising one or more kind of a polyol ester compound (X) selected from the group consisting of a complete ester and a partial ester of a pentaerythritol based compound (A) represented by the following general formula (1) and a fatty acid (B): 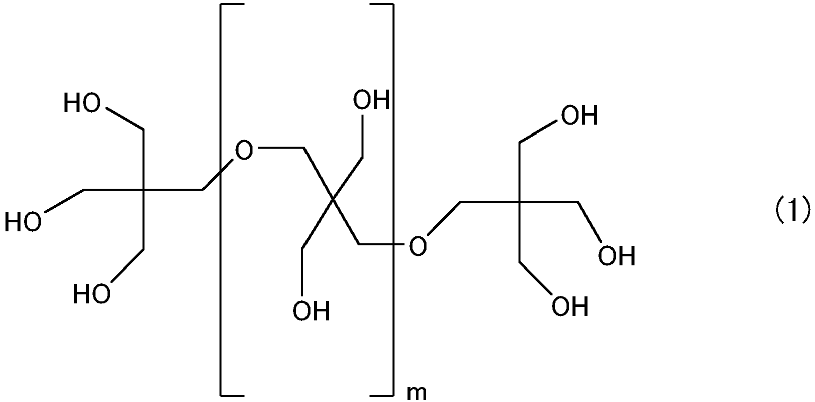 wherein in the general formula (1), m represents an integer of 0 or more and 4 or less,
the fatty acid (B) containing a short-chain fatty acid (B1) having 2 or more and 9 or less carbon atoms,
the short-chain fatty acid (B1) containing a linear short-chain fatty acid (B1-1) represented by the following general formula (2): 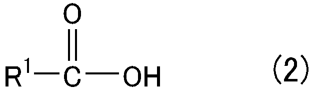 wherein in the general formula (2), R¹ represents a linear alkyl group having 1 or more and 8 or less carbon atoms or a linear alkenyl group having 2 or more and 8 or less carbon atoms,
the fatty acid (B) having a content of the short-chain fatty acid (B 1) of more than 50% by mol based on the total amount of the fatty acid (B).

2. The refrigerator oil composition according to claim 1, wherein in the case where m in the general formula (1) is 1 or more, the partial ester has a number of groups derived from the fatty acid (B) of 6 or more.

3. The refrigerator oil composition according to claim 1, wherein the polyol ester compound (X) is one or more kind selected from the group consisting of the complete ester.

4. The refrigerator oil composition according to any one of claims 1 to 3, wherein the fatty acid (B) further contains a long-chain fatty acid (B2) having 10 or more and 24 or less carbon atoms.

5. The refrigerator oil composition according to claim 4, wherein the long-chain fatty acid (B2) contains a linear long-chain fatty acid (B2-1) represented by the following general formula (3): 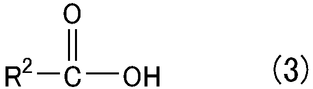 wherein in the general formula (3), R² represents a linear alkyl group having 9 or more and 23 or less carbon atoms or a linear alkenyl group having 9 or more and 23 or less carbon atoms.

6. The refrigerator oil composition according to claim 5, wherein in the general formula (3), R² represents a linear alkenyl group having 9 or more and 23 or less carbon atoms.

7. The refrigerator oil composition according to any one of claims 1 to 6, wherein the refrigerator oil composition has a content of the polyol ester compound (X) of 80% by mass or more based on the total amount of the refrigerator oil composition.

8. The refrigerator oil composition according to any one of claims 1 to 7, wherein the hydrocarbon based refrigerant is a hydrocarbon having 1 or more and 8 or less carbon atoms.

9. A mixed composition for a refrigerator comprising the refrigerator oil composition according to any one of claims 1 to 8, and a refrigerant containing a hydrocarbon based refrigerant.

10. A method of producing a refrigerator oil composition that is used with a refrigerant containing a hydrocarbon based refrigerant,
the method of producing a refrigerator oil composition, comprising a step of mixing one or more kind of a polyol ester compound (X) selected from the group consisting of a complete ester and a partial ester of a pentaerythritol based compound (A) represented by the following general formula (1) and a fatty acid (B) obtained through reaction of the pentaerythritol based compound (A) and the fatty acid (B): 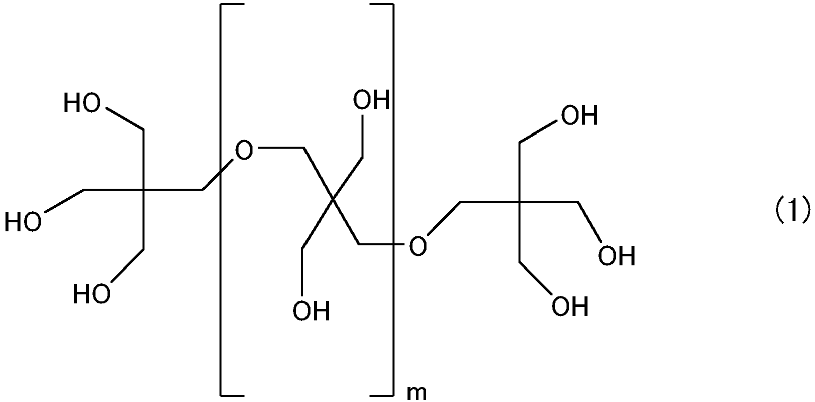 wherein in the general formula (1), m represents an integer of 0 or more and 4 or less,
the fatty acid (B) containing a short-chain fatty acid (B1) having 2 or more and 9 or less carbon atoms,
the short-chain fatty acid (B1) containing a linear short-chain fatty acid (B1-1) represented by the following general formula (2): 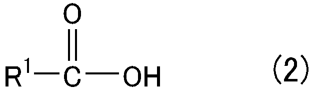 wherein in the general formula (2), R¹ represents a linear alkyl group having 1 or more and 8 or less carbon atoms or a linear alkenyl group having 2 or more and 8 or less carbon atoms,
the fatty acid (B) having a content of the short-chain fatty acid (B 1) of more than 50% by mol based on the total amount of the fatty acid (B).

11. The method of producing a refrigerator oil composition according to claim 10, wherein in the case where m in the general formula (1) is 1 or more, the partial ester has a number of groups derived from the fatty acid (B) of 6 or more.

12. The method of producing a refrigerator oil composition according to claim 10, wherein the polyol ester compound (X) is one or more kind selected from the group consisting of the complete ester.

13. The method of producing a refrigerator oil composition according to any one of claims 10 to 12, wherein the fatty acid (B) further contains a long-chain fatty acid (B2) having 10 or more and 24 or less carbon atoms.
